# EUROPEAN PATENT SPECIFICATION

(11) **EP 1 689 207 B1**
(45) Date of publication and mention of the grant of the patent: **28.10.2009**
(21) Application number: 06250539.1
(22) Date of filing: 01.02.2006
(51) Int. Cl.: H04W 28/22

(54) **Method for reverse link overload control in a wireless communication system**
Verfahren zur Überlastregelung für die Aufwärtsverbindung in einem drahtlosen Kommunikationssystem
Procédé de régulation de surcharge pour la liaison inverse dans une système de communication sans fil

(30) Priority: 04.02.2005 US 49952
(43) Date of publication of application: 09.08.2006
(73) Proprietor: LUCENT TECHNOLOGIES INC., Murray Hill NJ 07974-0636 (US)
(72) Inventor: Picot, Carol M., Boonton Township, NJ 07005 (US); Yang, Yang, Parsippany, NJ 07054 (US); Zhu, Lily H., Parsippany, NJ 07054 (US); Zou, Jialin, Randolph, NJ 07869 (US)
(74) Representative: Cockayne, Gillian

(56) References cited:
- EP-A- 1 161 113
- US-A1- 2004 214 591
- US-A1- 2004 258 035
- US-A1- 2005 014 524

## Description

### BACKGROUND OF THE INVENTION

There has been much standards development regarding the reverse or up link (e.g., from mobile station to base station) in the various wireless communication standards such as UMTS, cdma2000, etc. One area of concern is reverse link overload control or ROC. ROC is the process by which the base station determines to i) reduce the transmission rate or transmission power of active mobiles (also called access terminals, mobile terminals, etc.) within the coverage area of a sector or cell served by the base station; ii) prevent admission of new calls or iii) even mute some low priority mobiles or access terminals.

In order to support different types of traffic with associated quality-of-service (QOS), especially for the delay sensitive traffic, the performance of ROC becomes more and more important. Historically, the conventional ROC works based on the Rise-Over-Thermal (ROT). The total received power per sector such as given by the well-known received signal strength indication (RSSI) on the reverse link and the noise floor are measured at the base station, and as is known, the ROT is obtained based on the RSSI and the estimated noise floor. Then the ROT is compared to a target threshold or set point to trigger the loading control. If the ROT exceeds the target, an overload is determined and actions will be taken to reduce the system load. For example, the action may include reducing the transmission rate or transmission power of every active mobile within the coverage of a sector or cell; preventing admission of new calls or even muting some low priority active access terminals. For example, in a cdma2000 DOrA (Data Optimized Revision A) system, when the ROT exceeds the target threshold, the reverse activity bit (RAB) is set. This bit, sent in an overhead message to the access terminals in the sector or cell served by the base station, causes the access terminals in the sector or cell served by the base station to reduce their transmission rate when set. Transmission of the RAB follows a certain timing prescribed by standard.

To ensure the performance of the ROC, especially the fast ROC supported by cdma2000 DOrA standard, the ROC target should be set carefully under different scenarios such as different system loading, different noise sources/jammers, different methods of the noise floor estimation and the nature of different traffic types in service.

Since the ROT target of the ROC is dependent on different system operation scenarios, how to determine the target of the ROC is of ongoing concern. If the target is set too high, a system may work in an overloaded state with performance degraded drastically. If the target is set too low, the system may always work well below its full capacity, the system efficiency will be low and system resources will be wasted. Current methods to adjust the ROC target conduct open loop ROC target setting. As a result, it is difficult to improve the performance of the ROC, and a high overload margin is required.

US 2004/0258035 discloses a method for reverse link overload control based on an outage event metric.

### SUMMARY OF THE INVENTION

The present invention provide a method for reverse link overload control.

In one embodiment, the method includes adjusting an overload control threshold based on at least one outage event metric and overload control history. Overload control is performed based on the overload control threshold.

For example, the outage metric may be based on a number of erasures on a control channel, a number of bad frames received over at least one traffic channel, and/or a variance of the received signal strength indication during a frame.

In one embodiment, the adjusting step leaves the overload control threshold unchanged if the overload control history indicates no rate reductions have occurred.

In another embodiment, the adjusting step reduces the overload control threshold if the overload control history indicates at least one rate reduction has occurred and the outage metric indicates an outage event.

In an still further embodiment, the adjusting step increases the overload control threshold if the overload control history indicates at least one rate reduction has occurred and the outage metric indicates no an outage event.

In yet another embodiment, a noise floor is established based on a determination of whether access terminals in a serving area support a silence interval.

### BRIEF DESCRIPTION OF THE DRAWINGS

The present invention will become more fully understood from the detailed description given herein below and the accompanying drawings which are given by way of illustration only, wherein like reference numerals designate corresponding parts in the various drawings, and wherein:
Fig. 1 illustrates portions of a base station and radio network controller according to an embodiment of the present invention in detail;
Fig. 2 illustrates a flow chart of a method of ROC set point adjustment according to one embodiment of the present invention; and
Fig. 3 illustrates the silence interval in a cdma2000 wireless communication system.

### DETAILED DESCRIPTION OF EXAMPLE EMBODIMENTS

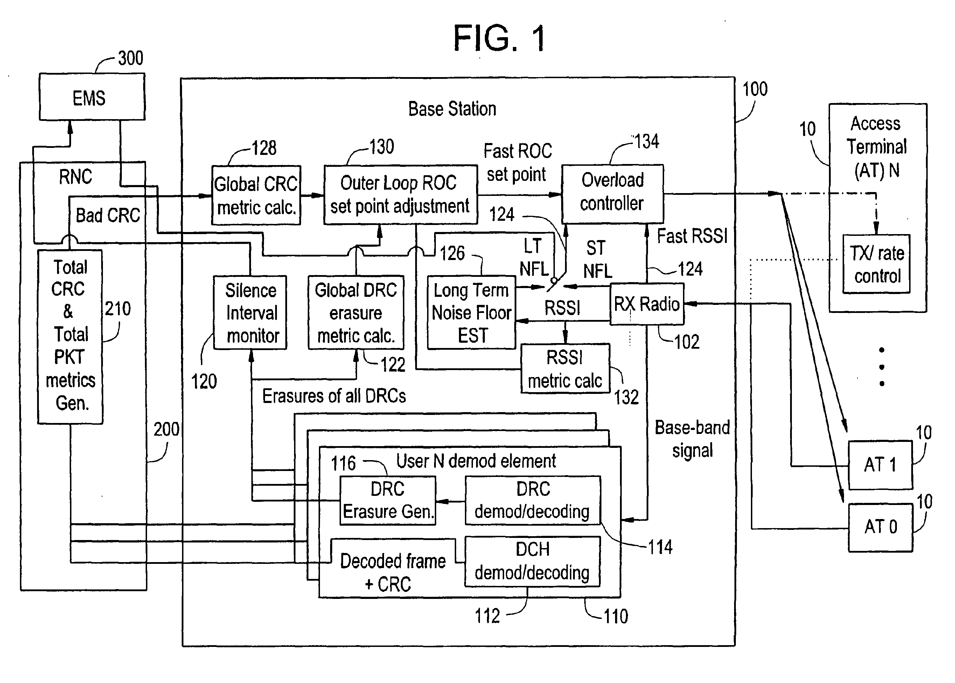

Fig. 1 illustrates portions of a base station and radio network controller according to an embodiment of the present invention in detail. For the purposes of example only, the embodiment of Fig. 1 will be described as being part of a cdma2000 wireless communication network. However, it will be understood from the description of the invention, that the present invention is not limited to this wireless communication standard.

As shown, a base station (BS) 100 wirelessly communicates with access terminals (ATs) 10 in a geographical serving area such as a sector or cell served by the base station 100. An access terminal 10 (also called a mobile station, a mobile terminal, a mobile, etc.) may be embodied as a wireless phone, a wireless equipped PDA, a wireless equipped computer, etc. The base station 100 communicates with a radio network controller 200. As is known, base stations and the radio network controller associated with those base stations share in the management of call (voice or data) processing. Some functions are performed at the base station, while others are performed at the radio network controller. In the wireless communication system presented in Fig. 1, some of the call management functions for performing reverse link overload control or ROC are performed at the base station 100 and others are performed at the radio network controller (RNC) 200. However, it will be understood that these functions could be moved to one or the other of the base station 100 and the RNC 200.

The RNC 200 also supplies information to an EMS 300. The EMS is an operator interface system. Here, a human operator may observe system measurements provide by this and other RNCs. The human operator may determine system behavior and status, and make appropriate changes in operating parameters. These operating parameter changes may be issued back to the RNC 200 and then onto the base station 100.

As shown in detail in Fig. 1, the base station 100 includes a receiver radio 102 receiving signals from the access terminals 10. A plurality of demodulators 110 demodulate the signals received from the respective access terminals 10.

Fig. 1 illustrates in block diagram form some of the functional aspects of the demodulators 110. As shown, each demodulator 110 includes a DCH demodulator/decoder 112 demodulating and decoding dedicated channels (DCH) in a received signal to produce decoded frames and an error indicator CRC for each frame. A good CRC indicates this data frame is correct, otherwise this frame is bad. A bad frame is a frame that could not be properly decoded and/or a frame that causes the base station 110 to generate a NAK (non-acknowledgement) message. Because the demodulation and decoding of received signals and the generation of the error indicator CRC are well-known in the art, these operations will not be described in detail.

Each demodulator 110 also includes a DRC demodulator/decoder demodulating and decoding the data rate control channel (DRC). A DRC erasure generator 116 outputs an indication of an erasure in the received DRC. An erasure is a bad slot - a slot that could not be properly demodulated and decoded.

As shown in Fig. 1, the RNC 200 receives the output of the demodulators 110 in the base station 100. The RNC 200 includes a total CRC and total frame transmission metric generator 210. The generator 210 determines the number of bad frames as indicated by the CRC, for example, after frame combine (e.g., combining frames from different base stations involved in a soft handoff) over the entire serving sector (or cell) served by the base station 110. In this embodiment, only the number of bad frames of the active users (active access terminals) in the serving sector are counted. The generator 210 also determines the total number of frames transmission received at the serving sector (or cell). Again in this embodiment, only the frame transmissions of active users are considered. In this embodiment, both the total number of bad frames and the total number of frames are generated on a per frame (or every a few frames) duration basis.

At the base station 100, a global CRC metric calculator 128 receives the totals from the generator 210 in the RNC 200 and generates a bad frame metric. In this embodiment, the bad frame metric equals the total number of bad frames divided by the total number of frames from the active users within a frame duration. The bad frame metric is one of several possible system outage metrics generated and sent to an outer loop ROC set point adjuster 130, which will be described in greater detail below.

A global DRC erasure metric calculator 122 shown in Fig. 1 generates another outage metric, which is sent to set point adjuster 130. The global DRC erasure metric calculator 122 receives DRC erasure indications generated by the DRC erasure generator 116 in each demodulator 110. The global DRC erasure metric calculator 122 determines the total number of DRC erasures in active DRCs of the serving sector during a frame by summing the received erasure indications over a frame. The global DRC erasure metric calculator 122 also determines the total number of DRC channels active in the serving sector, and generates an erasure outage metric as the total number of DRC erasures divided by the total number of active DRC channels. The DRC outage metric is sent to the set point adjuster 130. As an option, instead of using the DRC (data rate control channel), a similar metric could be obtained in the same fashion using the rate request indicator channel (RRI).

Yet another outage metric may be determined by the RSSI metric calculator 132 shown in Fig. 1. The RSSI metric calculator 132 receives the RSSI output from the receiver 102. The RSSI metric calculator 132 determines the variance of the RSSI. The ROC tends to stabilize and converge the RSSI when the set point is set appropriately. However, an improper set point causes a large distribution in the RSSI and thus a large variance. Accordingly, variance of the RSSI at the positive side compared with the RSSI target may be a good outage metric. The RSSI metric calculator 132 sends the variance of the RSSI as another outage metric to the set point adjuster 130.

The set point adjuster 130 adjusts the set point or overload control threshold. The operation of the set point adjuster 130 will be described in detail below.

An overload controller 134 determines whether an overload exists based on the overload control threshold. For example, if the overload controller 134 performs ROT based overload control, then the overload controller 134 receives the RSSI from the radio 102 and an estimated noise floor from a switch 124 (noise floor estimation will be discussed in detail below) and determines the ROT in the well-known manner. The ROT is then compared against the overload control threshold, which in this embodiment is an ROT threshold. If the ROT exceeds the ROT threshold, then the overload controller 134 determines overload exists and sets the RAB for the next transmission. If the ROT does not exceed the ROT threshold, then no overload is determined and the overload controller 134 does not set the RAB. As mentioned before, setting the RAB (reverse activity bit) causes the access terminals 10 to reduce their transmission rate. Instead of basing overload control on a manually set fixed threshold compared against ROT for generating RAB, other resource metrics may be used with an associated threshold adjusted by a closed loop as described below.

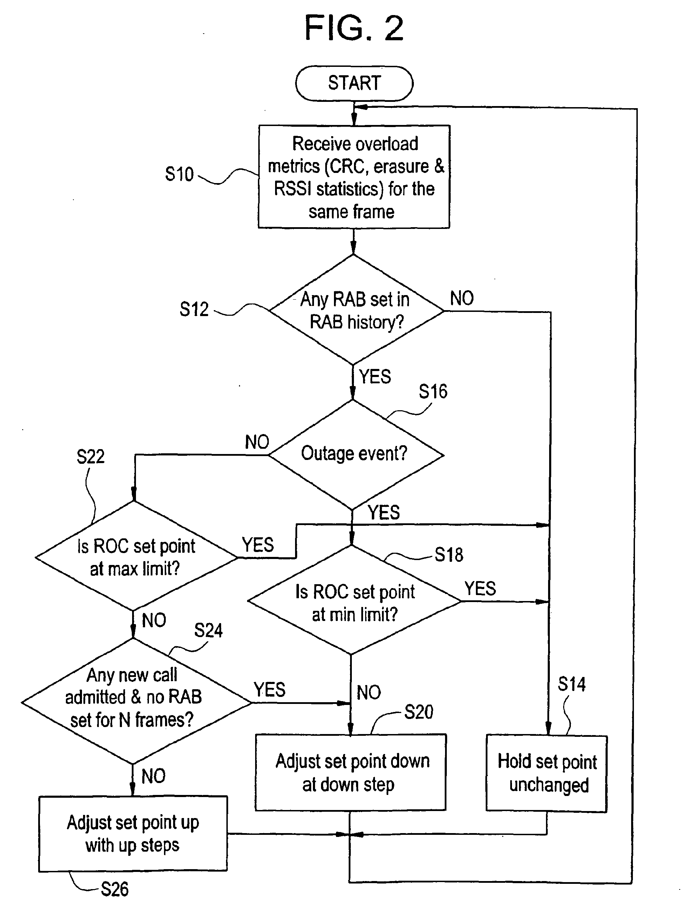

Operation of the set point adjuster 130 will now be described in detail with reference to Fig. 2. Fig. 2 illustrates a flow chart of the operation of the set point adjuster 130. As shown, in this embodiment, set point or overload control threshold adjustment is performed on a per frame basis. Beginning in step S10, the set point adjuster 130 receives the system outage metrics - the bad frame or CRC outage metric from the global CRC metric calculator 128, the erasure outage metric from the global DRC erasure metric calculator 122, and the RSSI variance outage metric from the RSSI metric calculator 132.

Then, in step S12, the set point adjuster 130 examines the RAB history for the past frame to determine if the RAB was set. If none of the RABs in the past frame were set, then in step S 14, the set point adjuster 130 holds the set point unchanged, and the process returns to step S 10 for the next frame.

If the RAB history indicates that at least one of the RABs in the past was set, then after step S12, the set point adjuster 130 determines whether any of the received system outage metrics indicates an outage event in step S16. For example, the set point adjuster 130 compares the bad frame outage metric to a threshold. If the bad frame outage metric exceeds the threshold, an outage event is determined. Similarly, the erasure outage metric and the RSSI variance outage metric are compared to respective thresholds, and if one of those respective thresholds is exceeded, an outage event is determined. As will be appreciated, the outage metric thresholds are design parameters set by the system designer based on QoS requirements.

If one or more of the system outage metrics indicates an outage event, then in step S18, the set point adjuster 130 determines if the set point is at a minimum. If so, processing proceeds to step S 14, where the set point remains unchanged. If the set point is not at the minimum, then in step S20, the set point is adjusted downward by a set point decrement amount. Processing then returns to step S 10 for the next frame.

Returning to step S16, if no outage event exists, then in step S22, the set point adjuster 130 determines if the set point is at a maximum limit. If so, then processing proceeds to step S 14, where the set point remains unchanged. If the set point is not at the maximum, then in step S24, the set point adjuster 130 determines if any new call has been admitted and no RAB has been set for the past N frames, where N is a design parameter set by the system designer. If so, the set point is adjusted downward by a set point decrement amount in step S20. If not, then in step S26, the set point is incremented by a set point increment. Processing then returns to step S10 for the next frame.

The above method determines if an overload has been declared (e.g., RAB set), yet an outage event was not detected (e.g., the system outage metrics did not exceed their associated threshold). When this occurs, its an indication that the set point is most likely set too low such that overloads are being declared unnecessarily. Upon detection of this situation, the set point is incremented.

In one embodiment, the set point decrement is a design parameter set by the system designer, and the set point increment is set equal to (the set point decrement * a target outage probability). The outage probability is the probability of an outage event which is indicated by the outage metrics: when most users' transmission are in error. The target outage probability is determined by the QoS requirement.

In another embodiment, to obtain a faster upward movement in the set point, in step S26, the set point may be increased by (the set point increment amount * the number of RAB set in the RAB history).

In the method of Fig. 2, the set point is constrained by a maximum and minimum limit to address the issue of frame errors generated because of bad geometry. In the cases where there are only a small number of users at bad locations/cell boundaries, bad error metrics will be generated, but adjusting the set point downward in this situation would be undesirable. Accordingly, the set point lower limit is set such that the RSSI measured by the receiver 102 in this situation is too low to hit the set point lower limit. The overload controller 134 will, therefore, not take action. On the other hand, if number of users is moderately high and most of them are at the cell boundary, the overload controller 134 can take action which will be good for overall system performance since a reduction in the transmission rate of users at bad geometry will help them to get good frames. In addition, most problematic inter-cell interference is generated by the access terminals at cell boundaries when only a very few users are at good locations. Under this situation, reducing the transmission rates of the access terminals will reduce the inter-cell interference

The maximum limit on the set point is established to address the case where the system is working well and the set point could move too high causing a loss in overload sensitivity.

In addition to overload control, the base station 100 also selectively supplies the noise floor estimate via the switch 124 to the overload controller 134 based on whether the access terminals 10 support a silence interval. For example, cdma2000 DOrA standard sets forth a silence interval which is used for obtaining an accurate estimate of the noise floor. According to standard, periodically, a few frames (1-3) are set aside as a silence interval during which no transmissions are to take place. During the silence interval, the base station 100 continues to sample the received signal strength indication (RSSI), and establishes the noise floor as the average RSSI over the silence interval.

As will be appreciated, there may be situations that prevent using this noise floor estimation method. For example, the base station 100 may be serving legacy access terminals that do not cease transmission during the silence interval, or the cell of the base station 100 may be adjacent to a cell of a wireless system that does not support the silence interval. Accordingly, the base station 100 includes silence interval monitor 120 to detect if there are access terminals 10 not supporting the silence interval and generates a report signal associated with that detection. As will be discussed in detail below, the report signal may help an operator at the EMS 300 to make decision whether to use the silence interval dependent noise floor estimation method or a noise floor estimation method not dependent on the silence interval.

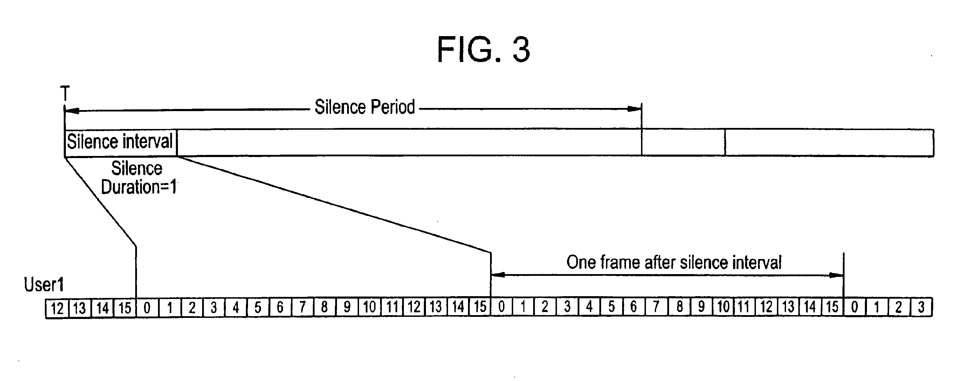

Next, a method of detecting access terminals non-compliant with a prescribed silence interval according to an embodiment of the present invention will be described. As discussed above, and as an example shown in Fig. 3, one frame each period of frames called a silence period is set aside as a silence interval. The silence interval, however, is not limited to being one frame. For example, the use of one, two or three consecutive frames as the silence interval is allowed by DOrA standard. Also, in the example of Fig. 3, each frame includes 16 slots defined in DOrA standard, but it will be understood that this method of the present invention is not limited to this number of slots.

Taking the case that silence interval is 1 frame as an example, if an access terminal supports the silence interval, then 16 erasures should be received by the silence interval monitor 120 from the DRC erasure generator 116 in each demodulator 110. Because the access terminal is not transmitting during the silence interval, no slots can be properly decoded. However, if less than 16 erasures are received, then the access terminal may not support the silence interval. In this embodiment of the method, a margin to account for improper synchronization is proposed. For example, a margin of 2 erasures may be used. Accordingly, a non-compliant access terminal is detected when:
the number of erasures logged in a frame of the silence interval is less than (the number of slots in a frame minus 2).

More generally, a non-compliant access terminal is detected if:
the number of erasures logged during the silence interval is less than (the number of slots in a frame times the number of frames in the silence interval - 2).

The results of this monitoring by the silence interval monitor are sent to the RNC 200, which reports them to the EMS 300. An operator at the EMS 300 may decide the noise floor estimate method to use based on the number of non-compliant access terminals in the system, and how long this bad silence interval situation lasts. Based on that decision, the operator at the EMS 300 issues a noise floor estimation selection signal, which is sent to the RNC 200 and then sent on to a switch 124 in the base station 100.

The switch 124 operates according to the noise floor estimation method selection signal. Namely, the switch 124 selects between a silence interval based short term noise floor samples/estimate output from the radio 102 and a long term noise floor estimate output from a long term noise floor estimator 126. The short term noise floor estimate may be the average RSSI during the silence interval, which maybe generated at the overload controller 134. The long-term noise floor estimator 126, which receives the RSSI from the radio 102, selects the minimum RSSI during the course of a previous 24 hour period as the noise floor. This is the well-known daily minimum RSSI noise floor estimation method.

If many of the access terminals 10 do not support the silence interval as detected by the silence interval monitor 120, then the EMS operator will make a decision and generate the noise floor estimate method selection signal, which controls the switch 124 to select the long term noise floor estimation method. If the access terminals 10 do support the silence interval as detected by the silence interval monitor 120, then the EMS operator issues a noise floor estimate method selection signal that controls the switch 124 to select the short term noise floor estimate.

The invention being thus described, it will be obvious that the same may be varied in many ways. Such variations are not to be regarded as a departure from the invention, and the such modifications are intended to be included within the scope of the invention.

## Claims

1. A method for reverse link overload control, **characterized by**:
adjusting (S10-S26) an overload control threshold based on at least one outage event metric and overload control history; and
performing overload control based on the overload control threshold.

2. The method of claim 1, wherein the outage metric is based on a number of erasures on a control channel.

3. The method of claim 2, wherein the control channel is one of a data rate control channel and a rate request indicator channel.

4. The method of claim 3, further **characterized by**:
determining the outage metric each frame based on the number of erasures for each active control channel in a sector.

5. The method of claim 1, wherein the outage metric is based on a number of bad frames received over at least one dedicated channel.

6. The method of claim 5, further **characterized by**:
determining the outage metric each frame duration based on a number of bad frames received from the data traffic channels of the active users in a sector.

7. The method of claim 1, wherein the outage metric is a variance of the received signal strength indication during a frame.

8. The method of claim 1, wherein the adjusting step leaves the overload control threshold unchanged if the overload control history indicates no rate reductions have occurred.

9. The method of claim 1, wherein the adjusting step reduces the overload control threshold if the overload control history indicates at least one rate reduction has occurred and the outage metric indicates an outage event.

10. The method of claim 1, wherein the adjusting step increases the overload control threshold if the overload control history indicates at least one rate reduction has occurred and the outage metric indicates no outage event.

11. The method of claim 1, wherein the adjusting step increases the overload control threshold if the overload control history indicates at least one rate reduction has occurred during a frame, the outage metric indicates no outage event during the frame, and no new call have been admitted during the frame or a rate reduction has occurred in at least one previous frame.

## Patentansprüche

1. Ein Verfahren zur Überlastregelung für die Aufwärtsverbindung, **gekennzeichnet durch**:
Einstellen (S10-26) eines Überlastregelungsgrenzwerts auf Grundlage mindestens einer Ausfallereignismetrik und eines Überlastungsregelungsverlaufs; und
Ausführen der Überlastregelung auf Grundlage des Überlastregelungsgrenzwerts.

2. Das Verfahren nach Anspruch 1, wobei die Ausfallmetrik auf einer Anzahl von Löschungen auf einem Steuerkanal basiert.

3. Das Verfahren nach Anspruch 2, wobei der Steuerkanal entweder ein Datenraten-Steuerkanal oder ein Datenratenanforderungs-Indikatorkanal ist.

4. Das Verfahren nach Anspruch 3, weiterhin **gekennzeichnet durch**:
Bestimmen der Ausfallmetrik bei jedem Rahmen auf Grundlage der Anzahl der Löschungen für jeden aktiven Steuerkanal in einem Sektor.

5. Das Verfahren nach Anspruch 1, wobei die Ausfallmetrik auf einer Anzahl von über mindestens einen dedizierten Kanal empfangenen fehlerhaften Rahmen basiert.

6. Das Verfahren nach Anspruch 5, weiterhin **gekennzeichnet durch**:
Bestimmen der Ausfallmetrik bei jeder Rahmendauer auf Grundlage einer Anzahl von von den Datenverkehrkanälen der aktiven Benutzer in einem Sektor empfangenen fehlerhaften Rahmen.

7. Das Verfahren nach Anspruch 1, wobei die Ausfallmetrik eine Abweichung der während eines Rahmens empfangenen Signalstärkenanzeige ist.

8. Das Verfahren nach Anspruch 1, wobei der Einstellschritt den Überlastregelungsgrenzwert unverändert lässt, wenn der Überlastungsregelungsverlauf angibt, dass keine Datenratenreduzierungen aufgetreten sind.

9. Das Verfahren nach Anspruch 1, wobei der Einstellschritt den Überlastregelungsgrenzwert reduziert, wenn der Überlastungsregelungsverlauf angibt, dass mindestens eine Datenratenreduzierung aufgetreten ist, und die Ausfallmetrik ein Ausfallereignis anzeigt.

10. Das Verfahren nach Anspruch 1, wobei der Einstellschritt den Überlastregelungsgrenzwert erhöht, wenn der Überlastungsregelungsverlauf angibt, dass mindestens eine Datenratenreduzierung aufgetreten ist, und die Ausfallmetrik kein Ausfallereignis angibt.

11. Das Verfahren nach Anspruch 1, wobei der Einstellschritt den Überlastregelungsgrenzwert erhöht, wenn der Überlastungsregelungsverlauf angibt, dass während eines Rahmens mindestens eine Datenratenreduzierung aufgetreten ist, und die Ausfallmetrik kein Ausfallereignis während des Rahmens angibt, und während des Rahmens kein neuer Anruf zugelassen wurde oder in mindestens einem vorherigen Rahmen eine Datenratenreduzierung aufgetreten ist.

## Revendications

1. Procédé de contrôle de la surcharge d'une liaison inverse, **caractérisé par** :
Réglage (S10-26) d'un seuil de contrôle de surcharge en se basant sur au moins un indice d'événement de panne et un historique de contrôle de surcharge ; et
Exécution du contrôle de surcharge en se basant sur le seuil de contrôle de surcharge.

2. Procédé selon la revendication 1, l'indice de panne étant basé sur un nombre donné d'effacements sur un canal de contrôle.

3. Procédé selon la revendication 2, le canal de contrôle étant un canal de contrôle du débit des données ou un canal indicateur de demande de débit.

4. Procédé selon la revendication 3, **caractérisé en outre par** :
Détermination de l'indice de panne de chaque trame en se basant sur le nombre d'effacements pour chaque canal de contrôle actif dans un secteur.

5. Procédé selon la revendication 1, l'indice de panne étant basé sur un nombre donné de trames non conformes reçues sur au moins un canal dédié.

6. Procédé selon la revendication 5, **caractérisé en outre par** :
Détermination de l'indice de panne de la durée de chaque trame en se basant sur un nombre donné de trames non conformes reçues des canaux de trafic de données des utilisateurs actifs dans un secteur.

7. Procédé selon la revendication 1, l'indice de panne étant une variation de l'indication de l'intensité du signal reçu pendant une trame.

8. Procédé selon la revendication 1, l'étape de réglage laissant le seuil de contrôle de surcharge inchangé si l'historique de contrôle de surcharge indique qu'aucune réduction du débit n'a eu lieu.

9. Procédé selon la revendication 1, l'étape de réglage réduisant le seuil de contrôle de surcharge si l'historique de contrôle de surcharge indique qu'au moins une réduction du débit a eu lieu et que l'indice de panne indique un événement de panne.

10. Procédé selon la revendication 1, l'étape de réglage augmentant le seuil de contrôle de surcharge si l'historique de contrôle de surcharge indique qu'au moins une réduction du débit a eu lieu et que l'indice de panne n'indique aucun événement de panne.

11. Procédé selon la revendication 1, l'étape de réglage réduisant le seuil de contrôle de surcharge si l'historique de contrôle de surcharge indique qu'au moins une réduction du débit a eu lieu pendant une trame, que l'indice de panne n'indique aucun événement de panne pendant la trame et qu'aucun nouvel appel n'a été accepté pendant la trame ou qu'une réduction du débit a eu lieu dans au moins une trame précédente.
